# EUROPÄISCHE PATENTANMELDUNG

(11) **EP 1 460 387 A1**
(43) Veröffentlichungstag der Anmeldung: **22.09.2004**
(21) Anmeldenummer: 04006515.3
(22) Anmeldetag: 18.03.2004
(51) Int. Cl.: G01D 5/244, G01D 18/00

(54) **Verfahren zur Erhöhung der Messgenauigkeit für einen begrenzten Weg in einem Messsystem**

(30) Priorität: 21.03.2003 DE 10312572
(71) Anmelder: AFT Atlas Fahrzeugtechnik GmbH, 58791 Werdohl (DE)
(72) Erfinder: Heintzen, Dirk, 91085 Weisendorf (DE); Nithammer, Andreas, 58809 Neuenrade (DE)
(74) Vertreter: Duschl, Edgar Johannes

(57) **Zusammenfassung**

Die Erfindung betrifft ein Verfahren zur Erhöhung der Messgenauigkeit für einen begrenzten Weg, wobei von dem tatsächlichen geometrischen Weg in einer "Lernphase" eine Abbildung gewonnen wird, die in einem Speicher abgelegt wird. Außerdem betrifft die Erfindung ein Verfahren zur besseren Steuerung einer Nockenwellen-Verstellung bei einer Brennkraftmaschine.

## Beschreibung

Die Erfindung betrifft ein Verfahren zur Erhöhung der Messgenauigkeit für einen begrenzten Weg mittels eines Messsystems gemäß dem Oberbegriff des Anspruches 1.

Aus dem Stand der Technik ist bekannt - beispielsweise von Dreikoordinaten-Messmaschinen -, dass ein Maßstab von einem Sensor abgetastet wird, um so einen betreffenden Weg bzw. eine Wegposition zu messen. Da der Maßstab als Strich-Gitter ausgeführt ist, muss nach dem Einschalten einer derartigen Messmaschine zunächst erst einmal eine Nullposition angefahren werden, in der dann die betreffende Koordinate in einem Zählwerk und/oder einer Anzeigeeinrichtung auf Null gesetzt werden. Wird nun in Richtung dieser Koordinate mittels der Messmaschine verfahren, so werden mittels des Sensors die Striche des Maßstabes - so genannte Weg-Ereignisse - abgezählt. Da die Striche des Gitters im Allgemeinen nicht der üblichen Millimeterangabe entsprechen, erfolgt ein Umrechnen aus dem elektrischen Signal des Sensors in die betreffende Einheit.

Das Messen mittels eines Gitter- bzw. Strich-Maßstabes ist teilweise kein reines Abzählen dieser Strichbalken. So gibt es die Methode, dass mittels eines zweiten, mit der Messeinrichtung sich mitbewegenden Strichbalkens, ein Moire-Muster erzeugt wird. Dieses Moire-Muster wird dann durch den Sensor ausgewertet und einer Umrechnung in die betreffende Maßeinheit zugeführt.

Um bei den Messsystemen aus dem Stand der Technik eine hohe Genauigkeit zu erzielen, ist immer auch eine hohe Genauigkeit des Maßstabes erforderlich. Natürlich spielt auch die Genauigkeit eines Sensors eine Rolle, jedoch kann ein Sensor noch so genau sein, ohne einen präzisen Maßstab - der ein Maßsystem verkörpert - ist ein präzises Messen nicht möglich.

Es ist deshalb Aufgabe der Erfindung, ein Verfahren und ein Messsystem bereitzustellen, mit denen eine höhere Messgenauigkeit erzielt werden kann, ohne dass die Genauigkeit des Maßstabes erhöht wird.

Die Aufgabe wird dadurch gelöst, dass dem Messen mindestens eine Lernphase vorausgeht. In dieser Lernphase werden - wie beim späteren Messen auch - ein Sensor und ein Maßstab relativ zueinander verfahren, wobei der Sensor elektrische Signale beim Passieren so genannter Weg-Ereignisse erzeugt. Diese Weg-Ereignisse können, wie beim Stand der Technik, quer zur Messrichtung angeordnete Striche oder Balken sein. Entscheidend für die Erfindung ist jedoch, dass die Weg-Ereignisse nicht nur in ihrer Anzahl registriert werden, sondern dass auch, zumindest zunächst, auch ihr zeitlicher Abstand mit erfasst wird. Dieser zeitliche Abstand ist hierbei eine Funktion der entsprechenden Geschwindigkeit, mit der sich der Sensor und der Maßstab während der Lernphase relativ zueinander bewegen. Die Geschwindigkeit des Abfahrens kann durch ein Programm in einer digitalen Steuerung bei Kenntnis der Gesamtstrecke und der dafür benötigten Zeit ausgerechnet werden.

Im Rahmen der Erfindung wird also von geometrischen Abständen zwischen Weg-Ereignissen eines Weges eine Abbildung erstellt, die dann in einem digitalen Speicher dieses Messsystems abgelegt wird. Beim späteren Messen wird dann diese Abbildung in einen gemessenen Weg umgerechnet.

Im Rahmen der Erfindung ist es wichtig, dass das Messsystem nur Informationen über einen begrenzten Weg geben muss, denn das erfindungsgemäße Messsystem kann nur über einen Weg Auskunft geben, den es vorher "gelernt" hat. Im Rahmen der Erfindung ist unter einem begrenzten Weg nicht nur eine gerade Strecke zu verstehen, sondern ein begrenzter Weg ist auch der Umfang eines Rades, beispielsweise eines Triggerrades, welches auf einer Kurbel- oder Nockenwelle angeordnet ist, um Dreh- und Winkelinformationen zu liefern. Obwohl nach einem Umlauf eines Triggerrades ein Messsignal nicht aufhören würde, weil ja die nächste Umdrehung beginnt, so stellt dennoch ein sich drehendes Triggerrad einen begrenzten Weg dar, weil der begrenzte Umfang eines Triggerrades später nur eine zyklische Wiederholung desselben darstellt. Bei einer Anzahl von n Weg-Ereignissen eines betreffenden Triggerrades, beginnt nach n Impulsen ein weiterer Zyklus.

Die erfindungsgemäße Abbildung von tatsächlichen geometrischen Abständen der Weg-Ereignisse kann beispielsweise in der Form erfolgen, indem während des Abfahrens des Maßstabes bei einer festgelegten Geschwindigkeit oder eines Geschwindigkeitsprofils, der tatsächliche Zeitabstand zwischen den Ereignissen in dem digitalen Speicher abgelegt wird. Durch die Zusatzinformation in dem Speicher, mit welcher Geschwindigkeit gemessen wurde, kann dann beim Messen - evtl. bei einer anderen Messgeschwindigkeit - aus dem aktuellen Zeitabstand zwischen den Weg-Ereignissen, in den gemessenen Weg umgerechnet werden.

Die Erhöhung der Messgenauigkeit funktioniert deshalb, weil ein Zeitsignal in einfacher Weise in einer höchsten Präzision erreichbar ist. Hierbei ist es erfindungsgemäß nicht wichtig, dass das Zeitsignal tatsächlich Sekunden oder Hundertstelsekunden wiedergeben kann, sondern dass eine beliebig hohe Anzahl von Zeittakten möglich ist, und dass diese Zeittakte auch über die Zeit hinweg nicht ihre Genauigkeit verlieren. So stellt beispielsweise ein Schwingquarz - mit beispielsweise einem Megahertz Taktfrequenz - ein Zeitsignal dar, welches bei entsprechender Qualität dieses Schwingquarzes für ein konstantes Zeitsignal sorgt.

In einer weiteren Ausgestaltung der Erfindung erfolgt die Abbildung der tatsächlichen geometrischen Abstände der Weg-Ereignisse in der Form, dass aus der gefahrenen Geschwindigkeit und der benötigten Zeit zwischen Weg-Ereignissen die Wegstrecke errechnet wird. Um eine Umrechnung in eine Weg-Strecke zu ermöglichen, ist bei einem geraden Weg die Anzahl der Weg-Ereignisse des begrenzten Weges erforderlich. In dem digitalen Speicher des Messsystems liegen dann also Werte in Millimeter oder, im Falle einer runden Wegstrecke, in Winkelgraden vor.

Für das erfindungsgemäße Verfahren ist es beim Messen nicht wichtig, ob von den tatsächlichen geometrischen Abständen eine Abbildung gewonnen wurde, die durch Zeitoder Wegabstände gekennzeichnet ist, denn je nach dem, welchen Charakter die geometrischen Repräsentanten der Abbildung haben, wird bei der Ermittlung der gemessenen Strecke in eine Weg-Einheit umgerechnet.

Im Rahmen der erfindungsgemäßen Erhöhung der Messgenauigkeit kann die im digitalen Speicher abgelegte Abbildung des tatsächlichen geometrischen Weges durch die Abstände zwischen Weg-Ereignissen erfolgen, oder die Abbildung kann auch aus tatsächlichen geometrischen Abständen bestehen, die immer von dem ersten Weg-Ereignis aus gemessen werden.

Die einzelnen Werte, die in dem Speicher abgelegt werden, müssen erfindungsgemäß nicht zwangsläufig in der Reihenfolge abgelegt werden, wie die Abstände zwischen den Wegereignissen sind. Mit anderen Worten: Es muss nicht der Abstand zwischen den ersten beiden Weg-Ereignissen in den Speicherplatz 1, der Abstand zwischen dem zweiten und dem dritten Weg-Ereignis in den Speicherplatz 2 abgelegt usw. werden. Die Reihenfolge des Ablegens der Werte kann auch in der Weise erfolgen, wie es beispielsweise für einen Auswertealgorithmus am günstigsten ist. Stellvertretend für einen Auswertealgorithmus soll hier der Butterfly-Algorithmus genannt werden. Bei diesem Algorithmus erfolgt die Zuordnung von Werten durch eine so genannte Bitumkehr seiner Indizes.

Durch das erfindungsgemäße Verfahren lässt sich nicht nur ermitteln, dass der Abstand zwischen zwei Weg-Ereignissen eventuell nicht konstant ist, sondern der Abstand selbst wird - wie schon beschrieben - ermittelt und als Zeit-, Längen-Wert oder Anzahl von Pulsen abgespeichert. Da durch die Lernphase über jeden Abschnitt zwischen Weg-Ereignissen eine Information vorliegt und diese Information in einer Reihenfolge abgespeichert wird, die eine Rekonstruktion der Reihenfolge des tatsächlichen geometrischen Weges gestattet, so ergibt die Folge ein Muster der gesamten Wegstrecke. Diese Wegstrecke besteht aus - zumindest zum Teil - unterschiedlich großen Werten. Durch einen Suchalgorithmus, der durch ein digitales Programm realisiert wird, kann man dann einen einzelnen Wert aus dieser Abbildung ermitteln, der nur ein einziges Mal vorkommt.

Durch die Reihenfolge der Werte in dem Speicher ist dann diesem Wert eine digitale Marke zuzuordnen. Diese Marke steht dann gewissermaßen für einen "Kilometerstein" dieses Wegabschnittes. Weil dieser Wert nur einmal vorkommt, kann er beim Vergleichen mit immer wieder neu eingehenden Werten eindeutig identifiziert werden. Erfindungsgemäß kann ein Suchalgorithmus aber auch eine Folge von Werten in dem Speicher suchen. Eine Folge von Werten entspricht einem bestimmten Muster. Eine Folge von Werten kann schneller und eindeutiger ermittelt werden als ein einzelner Wert, weil jeder einzelne Wert für sich eine geringe Wahrscheinlichkeit hat und in der Kombination mit anderen Werten eine noch wesentliche geringere Wahrscheinlichkeit. Eine Folge von Werten muss hierbei nicht aus zueinander benachbarten Werten bestehen, sondern kann auch durch ein beliebiges Muster festgelegt werden. Auch einer Folge von digitalen Werten kann eine digitale Marke zugeordnet werden, wobei hier jedem beliebigen Wert dieser Folge diese Marke zugeordnet werden kann, oder auch irgendeinem beliebigen anderen Wert. Wichtig ist hierbei lediglich, dass dem digitalen Programm der Abstand - d. h. die Anzahl der Indizes - zu einem der Werte der Folge bekannt ist.

Es wurde schon darauf eingegangen, dass mittels eines definierten Geschwindigkeitsprofils die Abbildung der tatsächlichen geometrischen Abstände zwischen den Weg-Ereignissen ermittelt wird. Dieses definierte Geschwindigkeitsprofil kann eine konstante Geschwindigkeit über den Gesamtweg sein. Das definierte Geschwindigkeitsprofil in der Lernphase oder später beim Messen kann aber auch durch eine stetig wachsende oder fallende Geschwindigkeit gekennzeichnet sein. Eine stetig wachsende Geschwindigkeit kann zum Beispiel vorliegen, wenn der begrenzte Weg durch ein Triggerrad verkörpert wird, welches auf einer Kurbelwelle positioniert ist. Wird beispielsweise ein Verbrennungsmotor gestartet oder anderweitig beschleunigt, so erhöht sich logischer Weise die Drehzahl und damit werden Zeitabstände ein und derselben Stelle auf der Triggerscheibe mit zunehmender Anzahl an Umdrehungen des Triggerrades immer kürzer. Durch die Information über die Anzahl der Weg-Ereignisse auf dem Umfang des Triggerrades, also durch die Anzahl der Zähne auf dem Triggerrad, kann die jeweilige Zeitspanne für eine Umdrehung des Triggerrades ermittelt werden und hieraus die entsprechende Drehzahl errechnet werden. Hieraus lässt sich in Verbindung mit einem konstanten Zeitsignal das jeweilige Geschwindigkeitsprofil während der Messung ermitteln, wodurch eine Rückrechnung auf ein konstantes Geschwindigkeitsprofil oder auch auf Winkelwerte möglich wird. Man sieht an diesem Beispiel, dass die Zunahme einer Drehzahl oder aber auch eine Reduzierung der Drehzahl - also eine Nicht-Konstanz bei messenden Vorgängen - kein Problem bei der erfindungsgemäßen Erhöhung der Messgenauigkeit darstellen. Ist ein Beschleunigungs- oder Verzögerungsprozess nicht linear, so ist dieses gemäß der Erfindung aber kein Problem für die Gewinnung eines definierten Geschwindigkeitsprofils, denn, je mehr Umdrehungen bei einem Triggerrad ausgewertet werden (beispielsweise eine Anzahl n), so kann eine Funktion der Geschwindigkeitsänderung n-1ten Grades errechnet werden.

Wenn gerade Wege gemessen werden, so gibt es keine zyklischen Messvorgänge, wie eben in Verbindung mit einem Triggerrad beschrieben. Um hier ein definiertes Geschwindigkeitsprofil zu erzeugen, wird beispielsweise eine Antriebseinheit, die das relativ zueinander Verfahren von Sensor und Maßstab bewerkstelligt, präzise angesteuert. Dieses kann beispielsweise in der Weise erfolgen, dass der Strom für den Elektromotor über die Zeit in definierter Weise gesteuert wird. Hilfreich ist hier sowohl bei rotatorischen als auch translatorischen Wegen, dass die Messsysteme immer auch mit einer Masse behaftet sind, so dass durch die Trägheit dieser Masse "zittrige" Eigenbewegungen nicht möglich sind. Dadurch ergibt sich ein gleichmäßiges Bewegungsverhalten, wodurch wiederum die Messqualität erhöht wird. Da das erfindungsgemäße Messverfahren unter Verwendung elektrischer Signale arbeitet, beispielsweise mittels eines Hall-Sensors und einem Triggerrad, ergibt sich zunächst erst mal ein analoges Signal. Dieses analoge Signal besteht dann hier aus einem aufsteigenden Bogen, der dann steil abfällt und in einem Bogen unterhalb der Zeitachse weiterführt. Der untere Bogen ist dann im Wesentlichen punktsymmetrisch zu dem oberen Bogen. Analoge Signale können aber durch eine Vielzahl von Störungen - beispielsweise überlagerten, höheren Frequenzen - gestört werden. Deshalb ist es vorteilhaft, wenn man das analoge Signal zunächst einer elektronischen Nachbearbeitung unterzieht. Diese Nachbearbeitung kann beispielsweise eine Tiefpassfilterung sein. In einer weiteren, vorteilhaften Ausgestaltung der Erfindung kann das elektrische Signal in ein Rechtecksignal umgewandelt werden. Die Flanken des Rechtecksignals wären dann vorteilhafter Weise zu den Zeitpunkten, wo das Analogsignal unter einem steilen Winkel die Zeitachse durchdringt.

Weitere vorteilhafte Ausgestaltungen der Erfindung betreffen die abgelegten Werte der Abbildung in dem digitalen Speicher. In einer ersten Ausgestaltung werden die gewonnenen Werte einmalig gewonnen und dann dauerhaft in dem digitalen Speicher abgelegt. Der digitale Speicher kann hier dann ein sogenannter EPROM-Baustein sein. In einer anderen Ausgestaltung werden die abgelegten Werte löschbar in dem Speicher abgelegt. Dieses löschbare Ablegen kann in der Weise erfolgen, dass der Speicher entweder ein elektrisch löschbarer Speicher ist (also ein E²-PROM) oder aber dieser Speicher ist ein einfacher Speicher und er verliert seine Informationen mit dem Ausschalten des Systems. In einer weiteren Ausgestaltung, ist die Lernphase nicht auf einen einmaligen Vorgang beschränkt, sondern die Lernphase wird immer wieder - gegebenenfalls auch sporadisch - durchgeführt, wodurch dann im Laufe der Zeit immer genauere Werte des Maßstabes ermittelt werden können. Hat man einen genaueren Wert gewonnen, so wird dieser Wert seinem Speicherplatz zugewiesen, wodurch er den alten Wert überschreibt.

In einer weiteren Ausgestaltung der Erfindung erfolgt bei jedem Neustart des Messsystems eine Lernphase. Diese kann dann vorteilhaft sein, wenn die Weg-Ereignisse sich im Laufe der Zeit verstellen oder verändern können. Auch ist eine Lernphase bei jedem Neustart erforderlich, wenn die digitale Steuerung über keine Speicherbausteine verfügt, die diese Werte auch nach einem Wegfall einer Stromversorgung erhalten können.

In einer Ausgestaltung der Erfindung sind die Weg-Ereignisse auf dem Maßstab regellos angelegt. Dieses hat den Vorteil, dass ein abschnittweise bestehendes Abstandsmuster wirklich nur einmal vorkommt und dadurch eindeutig zugeordnet werden kann. In einer anderen Ausgestaltung der Weg-Ereignisse auf dem Maßstab sind die Abstände eindeutig monoton fallend oder monoton steigend. Dieses bedeutet, dass zum Beispiel vom Anfang eines Maßstabes bis zu seinem Ende mit jedem Wegabschnitt zwischen zwei Weg-Ereignissen die Abstände entweder zu- oder abnehmen. Dadurch ist sichergestellt, dass der Abstand zwischen zwei Weg-Ereignissen nur einmal vorkommen kann, wodurch ein eindeutiger Platz auf dem begrenzten Weg, also ein "Kilometerstein", erzeugt wird.

Mit dem erfindungsgemäßen Verfahren lassen sich aber auch Vorrichtungen realisieren. In einer ersten Vorrichtung ist der begrenzte Weg als gerade Wegstrecke ausgebildet. Werden die Weg-Ereignisse beispielsweise in monoton fallenden oder monoton steigenden geometrischen Abständen realisiert, so kann nach einer kurzen Relativbewegung von Sensor und Maßstab über zwei Weg-Ereignisse hinweg, so kann eine Elektronik bei abgelegten Werten aus einer Lernphase sofort erkennen, in welcher Wegposition sie sich gerade befindet. Somit ist ein derartiger Weg-Aufnehmer sogar ein Absolut-Wegaufnehmer. Ein derartiger Absolut-Wegaufnehmer kann vorteilhafter Weise in einer Steuerung für ein elektronisches Kupplungsmanagement an einem Kraftfahrzeug verwendet werden. Durch den Absolut-Wegaufnehmer entfällt in dieser Anwendung ein vorheriges Kalibrieren, indem der Verstellmechanismus in eine Anfangsund in eine Endanschlagstellung fährt. Ein erfindungsgemäßer Absolut-Wegaufnehmer hat den Vorteil, dass bei einem Systemausfall des elektronischen Kupplungsmanagements durch einen Stromausfall nach Wiederherstellung der Stromversorgung sofort wieder die Weg-Information vorhanden ist.

In einer anderen Vorrichtung ist der begrenzte Weg als Triggerrad und demzufolge als Vollkreis ausgebildet und bildet zusammen mit dem Sensor einen Drehwinkelaufnehmer. Das Triggerrad ist hierbei beispielsweise auf einer Kurbel- und/oder Nockenwelle eines Verbrennungsmotors angeordnet. Werden Signale sowohl der Kurbelwelle als auch der Nockenwelle erfasst, und ist für jedes dieser Signale mindestens eine digitale Marke definiert, so können nicht nur die Drehzahl, sondern auch Relativwinkel zwischen Nockenund Kurbelwelle bei einer Nockenwellenverstellung erfasst werden. Da eine Kurbelwelle bei einem Verbrennungsmotor doppelt so viele Umdrehungen macht wie eine Nockenwelle, so darf bei einer Relativdrehwinkelmessung zwischen Nocken- und Kurbelwelle nur jede zweite Marke der Kurbelwelle ausgewertet werden.

Die Erfindung soll nun anhand der Figuren näher erläutert werden. Es zeigen:
- Figur 1: einen Ausschnitt aus einem Analogtriggersignal;
- Figur 2: einen Ausschnitt aus dem digitalisiertem Signal von Figur 1;
- Figur 3 bis 6: einen Vergleich zweier Triggersignale;
- Figur 7: eine Nockenwellen-Verstellung mittels eines motorisch verstellbaren Planetengetriebes;
- Figur 8: eine Nockenwellen-Verstellung mittels eines über ein Schleppmoment verstellbaren Planetengetriebes.

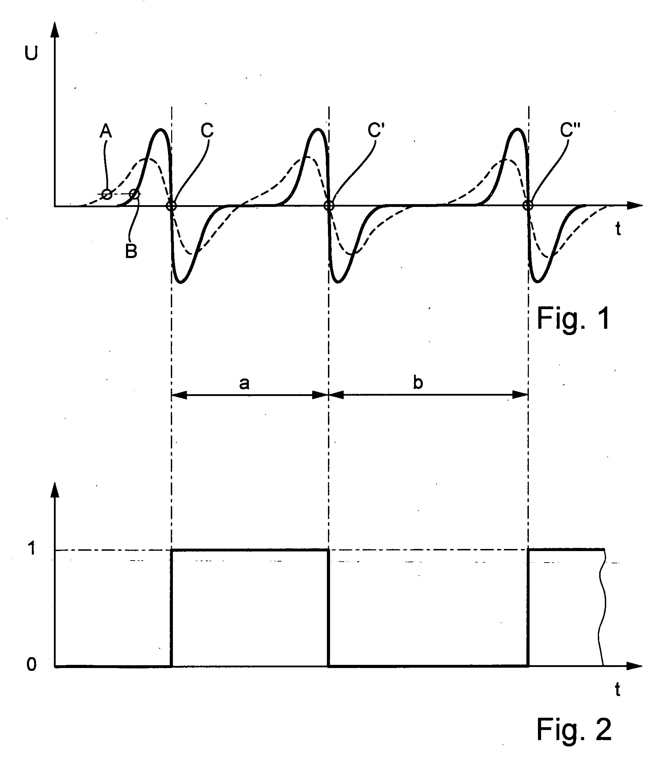

In der Figur 1 ist ein Analog-Signal dargestellt. Die waagerechte Achse entspricht der Zeitachse und die senkrechte Achse zeigt hierbei den Spannungsausschlag. Die durchgezogene Linie zeigt hierbei den Spannungsverlauf über die Zeit bei einer relativ hohen Geschwindigkeit. Der gestrichelte Verlauf eines Triggersignals ist derjenige, der bei einer geringeren Geschwindigkeit entsteht. Hierbei fällt auf, dass bei einer höheren Geschwindigkeit - also bei einer höheren Relativgeschwindigkeit eines Triggersensor zu körperlichern Triggermarken - die Spannungsausschläge deutlich größer ausfallen. Ferner fällt auf, dass bei der höheren Geschwindigkeit zugleich auch die Flächen zwischen der Kurve und der X-Achse schlanker werden. Diese Triggersignale sind auch dadurch gekennzeichnet, dass sie zu den Punkten C, C', C" punktsymmetrisch sind.

Würde man bei der Umwandlung des analogen Triggersignals in ein digitales Signal, wie es in der Figur 2 zu sehen ist, einen Spannungspegel zugrundelegen, wie er beispielsweise in der Figur 1 in den Punkten A und B angegeben ist, so ergäbe sich beispielsweise bei einer Erhöhung der Geschwindigkeit ein Verlagern des Punktes A in Richtung B oder noch darüber hinaus. Die Punkte A oder B würden also eine Verschiebung des Triggerpunktes bewirken. Deshalb ist es vorteilhaft, wenn der Triggerpunkt für die Digitalisierung des Analogsignals in den Punkten C, C' und C" erfolgt. Diese Punkte sind dadurch gekennzeichnet, dass hier durch Analogsignal ein Nulldurchgang durch die X-Achse (t-Achse) aufweist. Eine Verschiebung der Triggerpunkte erfolgt dann nicht.

In der Figur 2 kann man deutlich erkennen, dass die dort dargestellte Rechteckfunktion durch senkrechte Flanken ausgezeichnet ist. Ferner kann man erkennen, dass die Abstände a und b unterschiedlich sind. Dieses ist in der Darstellung der Figur 2 bewusst gewählt worden, um die Unregelmäßigkeit von digitalen Signalen - insbesondere von digitalen Triggersignalen - zu verdeutlichen.

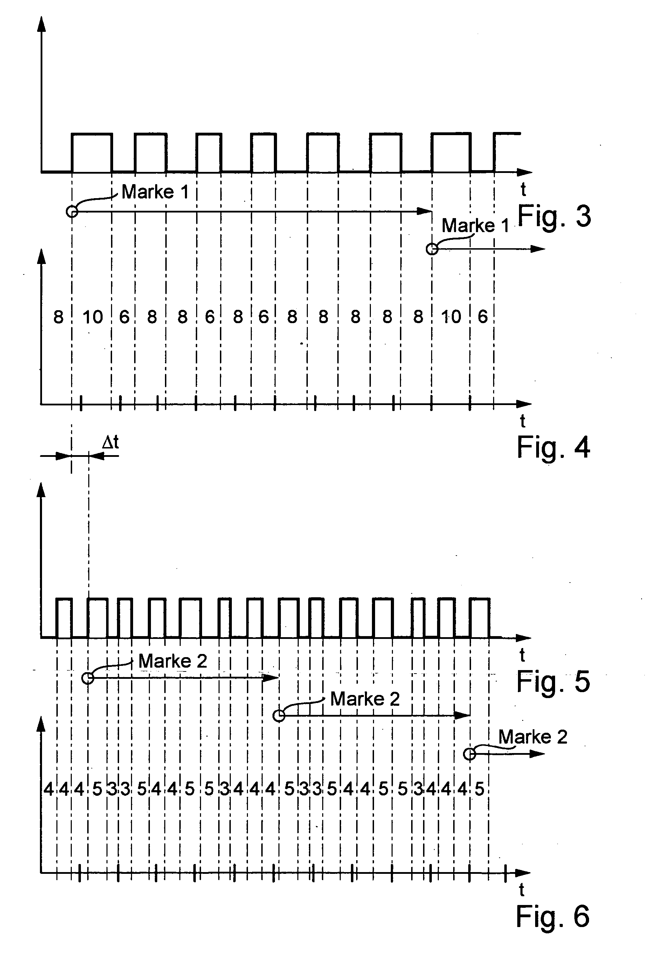

Mit den Figuren 3 bis 6 wird nun ein digitales Triggersignal veranschaulicht, welches größer als ein voller Zyklus ist. Die Figur 3 zeigt hierbei beispielsweise ein digitales Triggersignal einer Nockenwelle, während die Figur 5 das zugeordnete digitale Triggersignal einer Kurbelwelle veranschaulicht. Da bei einem 4-Takt-Verbrennungsmotor die Kurbelwelle doppelt so schnell läuft wie die Nockenwelle, so sind deshalb in der Figur 5 die Triggersignale doppelt so eng wie bei der Nockenwelle. Voraussetzung bei dieser Überlegung ist, dass die Kurbelwelle, als auch die Nockenwelle, über ein Triggerrad verfügen, welche über die gleiche Anzahl von Zähnen verfügen. Die Figuren 4 und 6 zeigen jeweils eine wahre Zeitachse, um besser ablesen zu können, dass die Rechteckfunktionen ungleichmäßig geformt sind. Der Abstand zwischen zwei Strichmarken auf der ZeitAchse t in den Figuren 4 und 6 ist für die Erklärung der Erfindung mit 10 Millisekunden angenommen worden. Ein realistischerer Abstand zwischen den Zeitmarken wäre zwar eher im Bereich von einer Millisekunde gegeben, jedoch wären dann die eingetragenen Zahlen, die Zeitabstände zwischen den gestrichelten Linien darstellen sollen, unhandliche Zahlenlängen. Ein Abstand 8 wie am linken Rand der Figur 4 zu sehen ist oder eine Zahl 4 wie am linken Rand der Figur 6 zu sehen ist, ist in der Figur leichter ablesbar als eine Zahl 0,8 bzw. 0,4.

Wenn man sich nun in der Figur 3 die zeitlichen Abstände zwischen den gestrichelten, senkrechten Linien betrachtet, so stellt man fest, dass die Triggersignale - in diesem Beispiel - zwischen der Größe 6 und 10 schwanken. Wenn man auf der Triggerscheibe ohne einen weiteren Sensor auskommen will, so ist es vorteilhaft, wenn man aus der Folge von engeren und größeren Abständen ein bestimmtes Muster erkennen kann, so dass ein bestimmter Punkt dieses Musters - beispielsweise der Anfang oder das Ende - als virtuelle Marke auf dem Triggerrad ansieht. In dem Beispiel der Figur 3 könnte man beispielsweise den Abstand 10 als Marke wählen, da dieser Wert nur einmal in einem Zyklus vorkommt. Man könnte aber auch das Muster - durch den Abstand 8 und Abstand 10 gebildet werden - als Marke definieren.

In der Figur 6, also dem digitalen Signalverlauf der beispielsweisen Kurbelwelle, ist eine Abstandsfolge mit den Werten 4 und 5 nicht eindeutig genug gegeben, denn etwa im mittleren Bereich eines Zyklus' (entsprechend der Pfeillänge) tritt noch einmal die Abstandsfolge 4 und 5 auf, ohne dass hier der Zyklus schon zu Ende wäre. Das Muster 4-4-5 wie es am linken Rand der Figur 6 zu sehen ist, stellt jedoch ein unverwechselbares Muster dar, weshalb dieser Punkt als Marke 2 gewählt werden kann.

Um einem digitalisierten Triggersignal eine höhere Genauigkeit zu geben, ist es vorteilhaft, wenn die Abfolge von engen und weiteren Abständen von einer Steuerungslogik "gelernt" wird. Durch diesen "gelernten" Verlauf einer Signalfolge, welche in Verbindung mit Triggerrädern sich nach einer Umdrehung des Triggerrades immer wieder zyklisch wiederholt, kann eine Steuerung beispielsweise nicht nur auf die Flanken reagieren, sondern die Steuerung verfügt sogar über die Information inwieweit die Flanken genau bzw. ungenau sind. Durch die Kenntnis des genauen bzw. des ungenauen Signalverlaufes ist es zudem vorteilhaft, dass nun auch Zahlenwerte ermittelt werden können, die zwischen den Flanken liegen. Weist beispielsweise ein Triggerrad bei einer Umdrehung nur 100 Triggerflanken auf, so ist nur eine Auflösung von maximal 3,6 Grad möglich.

In Verbindung mit den Figuren 3 bis 6 wurde bereits angedeutet, dass es sich hierbei um Signale von 2 baugleichen Triggerrädern handelt, die auf einer Kurbelwelle bzw. auf einer Nockenwelle angeordnet sind. Bei hochwertigen Brennkraftmaschinen gibt es teilweise eine sogenannte Nockenwellenverstellung. Dieses bedeutet, dass in Abhängigkeit von der Drehzahl der Kurbelwelle und den damit verbundenen Gaswechselproblemen im Zylinder die Nockenwelle relativ zur Kurbelwelle um einen Winkel von 40 bis 80 Grad der Kurbelwelle verstellt wird. Für diese Technologie der Verstellung ist es wichtig, dass man eine Rückmeldung über die Verstellung erhält. Dieses ist erfindungsgemäß in der Weise möglich, dass sowohl in dem digitalisierten Triggersignal der Kurbelwelle, als auch im digitalisierten Signal der Nockenwelle, je eine Marke gesucht wird und dann der Winkelversatz zwischen diesen zwei Marken ermittelt wird. Da die Kurbelwelle doppelt so schnell dreht wie die Nockenwelle, ist es wichtig, dass die Marke 2 der Kurbelwelle nur bei jedem zweiten Mal berücksichtigt wird. Diese Bestimmung der Relativwinkellage zwischen den Marken 1 und 2 erfolgt dann vorzugsweise in einer Nockenwellenposition, in der sie noch nicht relativ zur Kurbelwelle verstellt wurde. Nach der beschriebenen Lernphase - inklusiv der Lernphase bezüglich des Relativwinkels zwischen der Marke 1 und der Marke 2, der auch als ein Δ-t ausgedrückt werden kann, kann die Verstellung der Nockenwelle erfolgen.

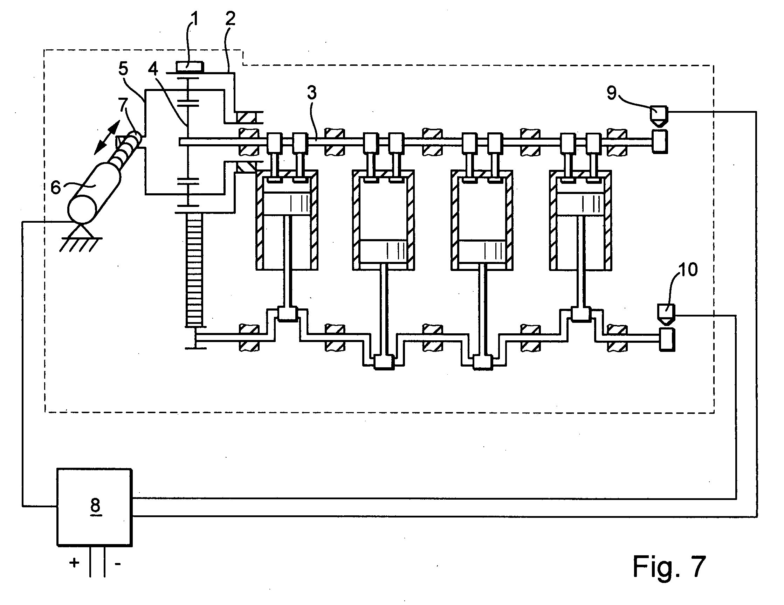

Die Verstellung der Nockenwelle kann beispielsweise mittels eines Planetengetriebes erfolgen. Eine Ausgestaltung der Erfindung betrifft eine Vorrichtung zur kontinuierlichen Phasenverstellung der Welle bezogen auf ihren Antrieb. In der Figur 7 handelt es sich um eine Nockenwelle eines Verbrennungsmotores, deren Winkellager (Phase) bezogen auf die Kurbelwelle verstellt wird. Der Antrieb der Nockenwelle kann über eine Kette oder einen Zahnriemen erfolgen. In der Figur 7 treiben der Zahnriemen 1 oder die Kette das Hohlrad eines Planetengetriebes an. Die Nockenwelle 3 ist mit dem inneren Zahnrad 4 des Planetengetriebes, dem Sonnenrad, verbunden. Der Planetenradträger, der Steg 5 also, ist mittels einer Vorrichtung mit einem ortsfesten Stellantrieb 6, z. B. einem Elektromotor, verbunden. Die Vorrichtung 7 kann z. B. ein Zahnrad- oder Schneckenantrieb oder ein Hebel sein. Der Stellantrieb kann selbsthemmend sein. Durch die Konstruktion des Planetengetriebes drehen sich Hohlrad und Sonnenrad in einem bestimmten Drehzahlverhältnis zueinander. Dies ändert sich nicht, solange der Steg sich aufgrund der Selbsthemmung des Stellantriebes nicht drehen kann oder der Stellantrieb aktiv seine Position hält. Wenn nun der Stellantrieb von der elektronischen Steuerung 8, die für ihre Berechnungen u. a. die Signale vom Nockenwellensensor 9 und dem Kurbelwellensensor 10 auswertet, ein Ansteuersignal erhält und den Steg in die eine oder andere Richtung dreht, verändert sich während dieser Zeit die Drehzahl des Sonnenrades, sie wird schneller oder langsamer, abhängig von der Drehrichtung des Steges. Damit eilt sie ihrem vorherigen Winkelbezug zum Hohlrad vor oder nach, die Phasenlage ändert sich. Wenn der Stellantrieb den Steg in der neuen Position anhält, wird dadurch das alte Drehzahlverhältnis wieder hergestellt, allerdings in der neuen Phasenlage.

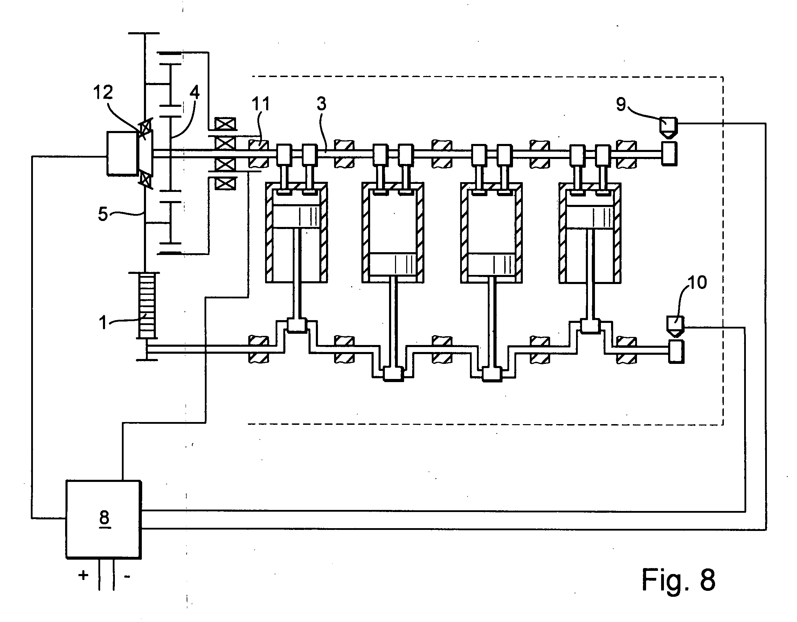

In Figur 8 treiben der Zahnriemen 1 oder die Kette den Steg 5. Das Hohlrad 2 ist mit einer Kupplung 11 verbunden. Der andere Teil der Kupplung 11 ist ortsfest, beispielsweise mit dem Zylinderkopf verbunden. Im Beispiel ist die Kupplung 11 als elektromagnetische Kupplung ausgeführt. Die Kupplung 11 kann auch eine Hydropumpe sein, der durch eine einstellbare Drossel in der Druckleitung ein zusätzliches Moment aufgebürdet wird. Eine Kupplung 12 kann eine Direktverbindung zwischen dem Antrieb des Planetengetriebes 5 und der am Sonnenrad 4 befestigten Nockenwelle 3 herstellen. Wenn nun eine Vorverstellung durchgeführt soll, wird durch Schließen der Kupplung 11 oder Öffnen der Kupplung 12 eine Änderung der Phasenlage erreicht, weil Sonnenrad 4 und Steg 5 ihr Drehzahlverhältnis für diese Zeit ändern. Das Sonnenrad dreht schneller und die Nockenwelle eilt in ihrer Phasenlage vor. Wenn keine Verstellung erwünscht ist, stellt die Kupplung 12 die Verbindung zwischen dem Steg (Antrieb) und dem Sonnenrad (Abtrieb) her. Dadurch rotiert das gesamte (Planetengetriebe mit der Umlaufgeschwindigkeit von Zahnriemen oder Kette (Stegantrieb), steht aber in sich still. Das heißt, die Planetenräder drehen sich nicht und das gesamte Planetengetriebe emittiert keine Laufgeräusche und verschleißt nicht. Es entspricht also einem "normalen" Zahnriemen- oder Kettenrad mit eingelagertem, nicht aktivierten, Planetengetriebe. Wenn eine Rückverstellung durchgeführt werden soll, werden beide Kupplungen, (11 und 12) geöffnet. Durch das Schleppmoment der Nockenwelle, hervorgerufen durch Reibung und Betätigung der Gaswechselventile, wird die Nockenwelle gebremst. Dadurch dreht sie langsamer und führt zu einer Drehbewegung des Hohlrades, da durch den Drehzahlunterschied zwischen Steg und Sonnenrad die Planetenräder rotieren und das Hohlrad treiben. Bei Verstellung in beide Richtungen kann durch eine dosierte Betätigung der Kupplung 11 und gleichzeitiger Steuerung der Kupplung 12 der Verstellvorgang kontrolliert werden. Dieses geschieht, indem von der Ansteuer- und Regelelektronik 8 die Signale der Kurbelwellenund Nockenwellensensoren (9 und 10) zur Berechnung herangezogen und die Kupplungen entsprechend angesteuert werden.

In einer weiteren Ausgestaltung der Erfindung wird der Nockenwellenversteller mittels Öldruck betätigt. Derartige Nockenwellenversteller sind beispielsweise aus den Schriften DE 198 08 618 A1 oder DE 198 08 619 A1 beschrieben. Es ist Aufgabe der Erfindung diese Nockenwellenversteller betriebssicherer zu machen.

Die in den zitierten Anmeldungen beschriebenen Versteller verfügen über eine Verriegelungsvorrichtung, die mittels des zum Betreiben des Verstellers erforderlichen Öldrucks betrieben wird. Wenn der Öldruck jedoch in nicht geeigneter Weise ansteigt, kann es vorkommen, dass der Versteller trotz des aufgeschalteten Öldrucks nicht verstellt, weil die Verriegelung klemmt. Die Verklemmung kommt dadurch zustande, dass der Öldruck von der einen Wirkseite des Verstellers zu schnell auf die andere wechselt. Dadurch will sich der Versteller bewegen und verklemmt die Verriegelungseinrichtung, die noch nicht völlig ausgerastet ist. Das neue Verfahren begegnet diesem Effekt in geeigneter Weise.

Die elektronische Steuerung erkennt, ob eine Verstellung erfolgreich beginnt oder nicht. Dadurch wird ein Zeitfenster definiert, innerhalb dessen, nach Ansteuerung des Verstellers mit Öldruck, dieser sich um einen definierbaren Verstellwinkel verstellt haben muss. Wenn die elektronische Steuerung feststellt, dass dies nicht der Fall ist, schaltet sie den Öldruck wieder um und startet nach einer einstellbaren Wartezeit einen neuen Versuch. Dabei wird der Öldruck nicht sprunghaft, wie bei einer normalen Verstellung, sondern langsam in Form einer einstellbaren Rampe, mit der das Hydraulikventil, das den Öldruck steuert, angesteuert wird, von der einen Wirkseite des Verstellers auf die andere geschaltet. Dann läuft wieder die Überwachung an, ob die Verstellung erfolgreich beginnt. Wenn dem so ist, wird die Kontrolle über den Versteller wieder an die "normale" Regelung übergeben. Wenn die Verstellung immer noch nicht funktioniert, wird die Steigung der Rampe um einen vorgebbaren Betrag verringert, so dass sich der Öldruck noch langsamer aufbaut. Wenn das immer noch nicht funktioniert, wird die Steigung der Rampe wiederum um den vorgebbaren Betrag verringert. Das kann so oft geschehen, bis die Steigung der Rampe Null ist. Dann wird eine Fehlermeldung ausgegeben, die entweder visualisiert auf einem angeschlossenen Rechner oder als Signal an eine übergeordnete Steuerung weitergegeben wird.

Eine weitere Ausführungsform sieht vor, dass, wenn die Regelungen von zwei oder mehr Verstellern, an einem V-Motor, z. B. in Kommunikation miteinander stehen oder aber im selben Steuergerät ablaufen, die Regelung des Verstellers, der klemmt, ein Signal ausgibt, worauf die Regelung des anderen Verstellers diesen zurückverstellt und wartet, bis der eine Versteller wieder funktioniert, damit beide relativ synchron arbeiten können.

## Patentansprüche

1. Verfahren zur Erhöhung der Messgenauigkeit für einen begrenzten Weg mittels eines Messsystems, welches im Wesentlichen aus einem Sensor und einem Maßstab besteht, wobei sich der Sensor und der Maßstab während des Messens relativ zueinander bewegen und hierbei Weg-Ereignisse erfasst werden, die durch den Sensor als elektrische Signale wiedergegeben werden, **dadurch gekennzeichnet, dass** dem Messen mindestens eine Lernphase vorausgeht, in der durch das relativ zueinander Abfahren des Sensors zum Maßstab die tatsächlichen geometrischen Abstände der Weg-Ereignisse als Abbildung in einem digitalen Speicher abgelegt werden und beim späteren Messen diese Abbildung in einen gemessenen Weg umgerechnet wird.

2. Verfahren vorzugsweise nach Anspruch 1, **dadurch gekennzeichnet, dass** die Abbildung in der Weise gewonnen wird, dass mittels eines definierten Geschwindigkeitsprofils das relativ zueinander Abfahren des Sensors zum Maßstab erfolgt und in Verbindung mit einem konstanten Zeitsignal ein nicht geometrischer Repräsentant der Strecke zwischen zwei Weg-Ereignissen ermittelt wird.

3. Verfahren vorzugsweise nach Anspruch 2, **dadurch gekennzeichnet, dass** der nicht geometrische Repräsentant aus der gefahrenen Geschwindigkeit und der dafür benötigten Zeit ermittelt wird.

4. Verfahren vorzugsweise nach Anspruch 1, **dadurch gekennzeichnet, dass** die Abbildung in der Weise gewonnen wird, dass mittels eines definierten Geschwindigkeitsprofils das relativ zueinander Abfahren des Sensors zum Maßstab erfolgt und in Verbindung mit einem konstanten Zeitsignal ein geometrischer Repräsentant der Strecke zwischen zwei Weg-Ereignissen ermittelt wird, indem aus der gefahrenen Geschwindigkeit und der hierfür benötigten Zeit die Wegstrecke errechnet wird.

5. Verfahren vorzugsweise nach einem der Ansprüche 1 bis 4, **dadurch gekennzeichnet, dass** während des Messens die Abstände zwischen den Weg-Ereignissen nach einem der Ansprüche 2 bis 4 entweder als Zeitoder als Weg-Abstand ermittelt werden und je nach dem Charakter der abgelegten Werte - entweder als Zeit- oder als Weg-Abstand derart umgerechnet werden, dass gleiche Abstands-Charaktere miteinander verglichen werden können, so dass aus den abgelegten Werten und den gemessenen Werten die tatsächliche geometrische Wegstecke rekonstruiert werden kann.

6. Verfahren vorzugsweise nach einem der Ansprüche 1 bis 5, **dadurch gekennzeichnet, dass** die einzelnen Werte der Abbildung in dem Speicher in der Weise abgelegt werden, dass die tatsächliche Abfolge der Wegabschnitte zwischen den Weg-Ereignissen rekonstruiert werden kann.

7. Verfahren vorzugsweise nach Anspruch 6, **dadurch gekennzeichnet, dass** die einzelnen Werte der Abbildung in dem Speicher in der Reihenfolge abgelegt werden, die der tatsächliche Abfolge der Wegabschnitte zwischen den Weg-Ereignissen entspricht.

8. Verfahren vorzugsweise nach einem der Ansprüche 1 bis 7, **dadurch gekennzeichnet, dass** mittels eines Suchalgorithmus' ein einzelner Wert aus der Abbildung in dem Speicher gesucht wird, der nur einmal vorkommt.

9. Verfahren vorzugsweise nach einem der Ansprüche 1 bis 7, **dadurch gekennzeichnet, dass** mittels eines Suchalgorithmus' eine Folge von Werten aus der Abbildung in dem Speicher gesucht wird, der nur einmal vorkommt.

10. Verfahren vorzugsweise nach Anspruch 9, **dadurch gekennzeichnet, dass** die Folge - zumindest zum Teil - aus nicht benachbarten Werten besteht.

11. Verfahren vorzugsweise nach einem der Ansprüche 8 bis 10, **dadurch gekennzeichnet, dass** die durch den Algorithmus gefundene Stelle mit einer digitalen Marke versehen wird.

12. Verfahren vorzugsweise nach einem der Ansprüche 1 bis 11, **dadurch gekennzeichnet, dass** der begrenzte Weg aus einer geraden Wegstrecke besteht.

13. Verfahren vorzugsweise nach einem der Ansprüche 1 bis 11, **dadurch gekennzeichnet, dass** der begrenzte Weg aus einem Vollkreis besteht.

14. Verfahren vorzugsweise nach einem der Ansprüche 2 bis 13, **dadurch gekennzeichnet, dass** das definierte Geschwindigkeitsprofil durch eine konstante Geschwindigkeit über den Gesamtweg dargestellt wird.

15. Verfahren vorzugsweise nach einem der Ansprüche 1 bis 14, **dadurch gekennzeichnet, dass** das elektrische Signal elektronisch nachbearbeitet wird.

16. Verfahren vorzugsweise nach Anspruch 15, **dadurch gekennzeichnet, dass** das elektrische Signal in ein Rechtecksignal umgewandelt wird.

17. Verfahren vorzugsweise nach einem der Ansprüche 1 bis 16, **dadurch gekennzeichnet, dass** die abgelegten Werte der Abbildung dauerhaft in dem digitalen Speicher abgelegt werden.

18. Verfahren vorzugsweise nach einem der Ansprüche 1 bis 16, **dadurch gekennzeichnet, dass** die abgelegten Werte der Abbildung löschbar in dem digitalen Speicher abgelegt werden.

19. Verfahren vorzugsweise nach Anspruch 18, **dadurch gekennzeichnet, dass** bei einem Vorliegen einzelner genauerer Werte diese an dem Platz des ungenaueren Wertes gespeichert werden, wodurch diese dann überschrieben werden.

20. Verfahren vorzugsweise nach mindestens einem der Ansprüche 1 bis 19, **dadurch gekennzeichnet, dass** vor jedem Neustart des Messens eine Lernphase durchlaufen wird.

21. Verfahren vorzugsweise nach einem der Ansprüche 1 bis 20, **dadurch gekennzeichnet, dass** die Weg-Ereignisse auf dem Maßstab regellos sind.

22. Verfahren vorzugsweise nach einem der Ansprüche 1 bis 20, **dadurch gekennzeichnet, dass** die Weg-Ereignisse auf dem Maßstab monoton fallende oder monoton steigende geometrische Abstände haben.

23. Vorrichtung zur Durchführung des Verfahrens vorzugsweise nach einem der Ansprüche 1 bis 22, **dadurch gekennzeichnet, dass** der begrenzte Weg, der als gerade Wegstrecke gestaltet ist, zusammen mit dem Sensor einen Weg-Aufnehmer bildet, der, vorzugsweise als Absolut-Wegaufnehmer ausgebildet, beispielsweise für eine Steuerung für ein elektronisches Kupplungsmanagement in einem Kraftfahrzeug verwendet wird.

24. Vorrichtung zur Durchführung des Verfahrens vorzugsweise nach einem der Ansprüche 1 bis 22, **dadurch gekennzeichnet, dass** der begrenzte Weg, der als Vollkreis gestaltet ist, zusammen mit dem Sensor einen Drehwinkel-Aufnehmer bildet, der vorzugsweise auf einer Kurbelwelle und/oder Nockenwelle angeordnet und beispielsweise für eine Drehwinkel-/Drehzahl-Erfassung einer Nockenund/oder Kurbelwelle in einem Kraftfahrzeug verwendet wird.

25. Vorrichtung vorzugsweise nach Anspruch 24, **dadurch gekennzeichnet, dass** bei einer Nockenwellen-Verstellung nur jedes zweite Wegereignis der Kurbelwelle verwendet wird.

26. Vorrichtung vorzugsweise nach einem der Ansprüche 1 bis 25, **dadurch gekennzeichnet, dass** nur ein Abstand zwischen zwei benachbarten Weg-Ereignissen - beispielsweise der Abstand zwischen zwei benachbarten Zahnflanken einer Triggerscheibe - ein anderes Mass aufweist, als die Abstände zwischen den anderen Weg-Ereignissen.

27. Vorrichtung vorzugsweise nach einem der Ansprüche 23 bis 26, **dadurch gekennzeichnet, dass** der Sensor als Hall-Sensor ausgebildet ist

28. Vorrichtung vorzugsweise nach einem der Ansprüche 23 bis 26, **dadurch gekennzeichnet, dass** das Triggerrad aus Metall besteht.
